# EUROPEAN PATENT SPECIFICATION

(11) **EP 2 252 184 B1**
(45) Date of publication and mention of the grant of the patent: **21.11.2012**
(21) Application number: 09720310.3
(22) Date of filing: 05.03.2009
(51) Int. Cl.: A47J 37/00, F24B 13/00, F21V 33/00, F27D 21/02

(54) **A BARBEQUE HOOD AND AN ASSOCIATED LIGHTING ARRANGEMENT**
GRILLHAUBE UND ENTSPRECHENDE BELEUCHTUNGSANORDNUNG
HOTTE DE BARBECUE ET DISPOSITIF D'ÉCLAIRAGE ASSOCIÉ

(30) Priority: 10.03.2008 AU 2008901160
(43) Date of publication of application: 24.11.2010
(73) Proprietor: Shriro Australia PTY Limited, Lane Cove, NSW 2066 (AU)
(72) Inventor: LEAVENS, Benjamin, John, Woollahra NSW 2025 (AU)
(74) Representative: Brown, Alexander Edward
(86) International application number: PCT/AU2009/000272
(87) International publication number: WO 2009/111819

(56) References cited:
- FR-A1- 2 598 204
- US-A- 6 065 467
- US-A1- 2005 083 678
- US-B1- 6 935 327
- US-B1- 7 168 363

## Description

### Field of the Invention

The present invention relates to a barbeque hood and an associated lighting arrangement.

### Background of the Invention

Hitherto, one approach for attempting to illuminate barbeque cooking surfaces used external lamps mounted to the side of the barbeque hood or clamped to the serveries. The lamps use a flexible neck to help position them appropriately. Another approach used lamps connected to the handle of the hood, which illuminate from above when the hood is open. The disadvantages associated with the above approaches include: that the light source shining in from the side does not give optimum illumination to the cooking surface; the inability to illuminate the inside of the barbeque when the hood is closed; that they can get in the way when cooking; and that they are not aesthetically pleasing.

See documents US-B-6 935 327, US-B-7 168 363.

### Object of the Invention

It is the object of the present invention to substantially overcome or at least ameliorate one or more of the above disadvantages.

### Summary of the Invention

Accordingly, the present invention provides a barbeque hood, the hood including:
a hood panel with an exterior and an interior surface
a light housing mounted adjacent the interior surface of the hood; and
at least one light mounted to the light housing, wherein the light housing and the hood panel together define an enclosed volume and the hood also includes a fan adapted to remove air from the volume.

The hood preferably includes at least one bracket between the hood panel and the light housing. The bracket(s) is/are preferably attached to the hood panel by welding and to the light housing by screws.

The light housing preferably includes at least one vent opening therein. The fan is preferably in fluid communication with the volume via a duct, which is preferably mounted to the hood panel.

The hood preferably also includes at least one hood lining mounted to, and spaced apart, from the hood panel.

The hood preferably includes a rear part and a front part. The rear part is preferably fixed to the barbeque. The light housing is preferably mounted to the rear part. The front part is preferably pivotally mounted to the rear part.

### Brief Description of the Drawings

A preferred embodiment of the invention will now be described, by way of example only, with reference to Figures 6 - 8 of the accompanying drawings in which:
Fig. 1 is a perspective view of a barbeque hood and a lighting arrangement, not encompassed within the scope of the invention but included for information only, in a closed orientation;
Fig. 2 is a perspective view of the barbeque hood and the lighting arrangement shown in Fig. 1, in an open orientation;
Fig. 3 is a perspective view of the rear part of the barbeque hood and the lighting arrangement shown in Fig. 1;
Fig. 4 is a side view of the rear part and the lighting arrangement shown in Fig. 3;
Fig. 5 is an exploded perspective view of the rear part and the lighting arrangement shown in Fig. 3;
Fig. 6 is a perspective view of an embodiment of a rear part of a barbeque hood and a lighting arrangement;
Fig. 7 is a cross-sectional side view of the rear part and the lighting arrangement shown in Fig. 6 along line 7-7; and
Fig. 8 is an exploded perspective view of the rear part and the lighting arrangement shown in Fig. 6.

### Detailed Description of the Preferred Embodiments

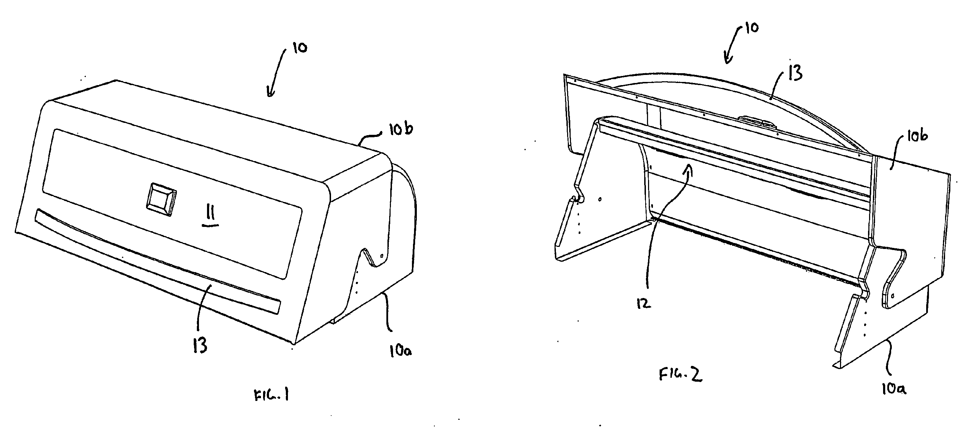

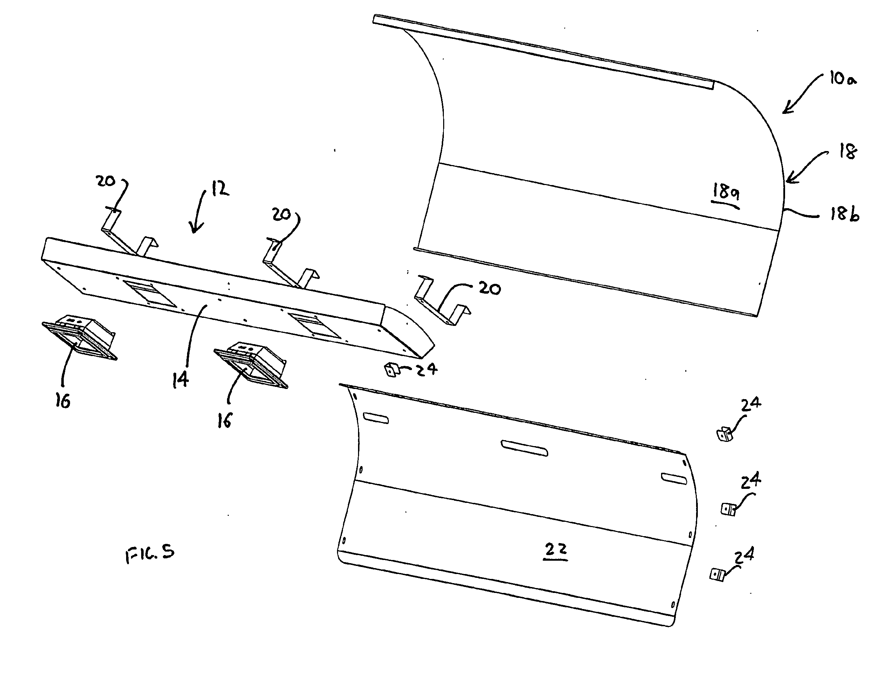

Figs. 1 to 5 show a barbeque hood 10 and an associated lighting arrangement 12 not encompassed within the scope of the invention but included for information only. The hood 10 includes a rear hood part 10a, which is fixed to the barbeque (not shown), and a front hood part 10b, which is pivotally mounted to the rear hood part 10a. The front hood part 10b includes a transparent glass panel 11 and a handle 13.

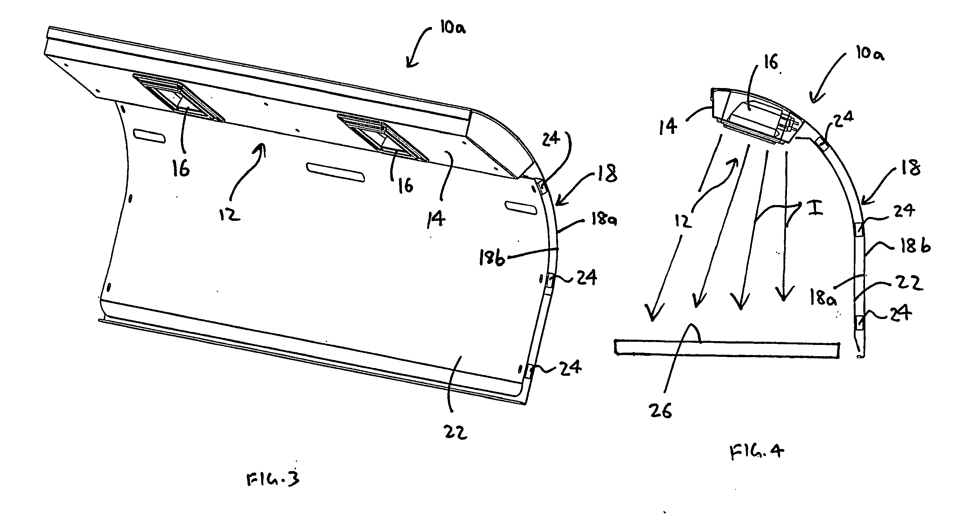

As best shown in Figs. 3 to 5, the lighting arrangement 12 includes a light housing 14 with a pair of lights 16 mounted thereto. The lights 16 are 12 Volt halogen oven lamps and are mounted to the housing 14 by metal spring clips and screws (not shown). The rear hood part 10a includes a hood panel 18 with an exterior surface 18a and an interior surface 18b. The housing 14 is mounted adjacent the interior surface 18b of the hood panel 18 with three brackets 20. The brackets 20 are attached to the housing 14 by screws (not shown) and to the interior surface 18b of the hood panel 18 by welding.

The rear hood part 10a also includes a hood lining 22 mounted adjacent to, and spaced apart from, the interior surface 18b of the hood 18. The hood lining 22 is mounted to the hood panel 18 by six brackets 24. The brackets 24 are attached to the hood lining 22 by screws (not shown) and to the hood panel 18 by welding.

The electrical wiring (not shown) for the lights 16 passes between the housing/lining 14/22 and the hood panel 18.

As best shown in Fig. 4, the illumination I emitted from the lights 16 is directed on to a cooking surface 26 of a barbeque.

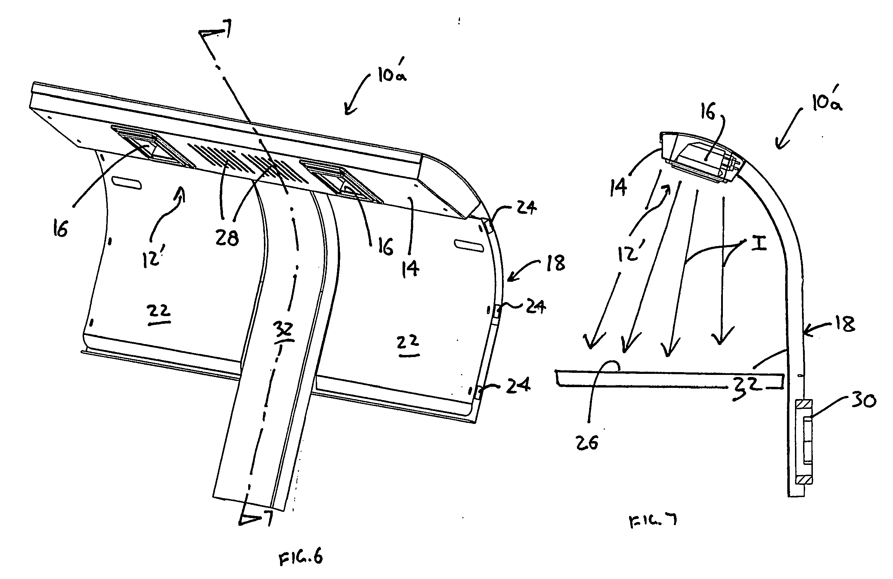

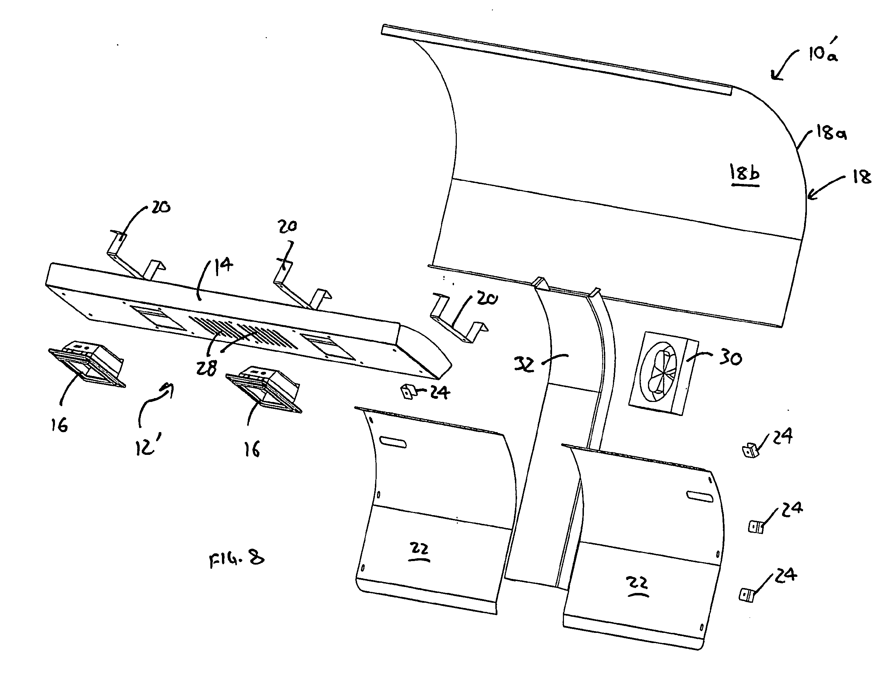

An embodiment of the invention showing a hood rear part 10a' and lighting arrangement 12' is shown in Figs. 6 to 8. The arrangement 10a', 12' are similar to those previously described and like reference numerals are used to indicate like features. However, in the embodiment of the invention, the light housing 14 includes a number of slotted vent openings 28, which are in fluid communication with the volume enclosed between the light housing 14 and the hood panel 18. That volume is also in fluid communication with an exhaust fan 30 via a duct 32. Accordingly, when the fan is energised, gases (for example, smoke from cooking) are advantageously evacuated from adjacent the barbeque cooking surface 26.

The advantages of the hood and lighting arrangement described above are numerous. Firstly, the use of unsightly fixings protruding through to the exterior surface of the hood is avoided. Secondly, the interior volume created between the hood panel and the light housing creates an insulative air gap, which protects the wires providing electrical power to the lights. Thirdly, the volume between the exterior of the hood lining and the interior of the hood panel creates an insulative air gap which reduces the heating of the hood panel exterior surface, thereby improving safety. Fourthly, the hood and lighting arrangement can be manufactured relatively easily and cost-effectively due to the majority of the components being formed from folded steel sheet. Finally, the lights illuminate the barbeque's cooking surface regardless of whether the front hood part is open or closed.

Although the invention has been described with reference to a preferred embodiment, it will be appreciated by those persons skilled in the art that the invention can be embodied in many other forms.

## Claims

1. A barbeque hood, the hood including:
a hood panel (18) with an exterior and an interior surface
a light housing (14) mounted adjacent the interior surface of the hood; and
at least one light (16) mounted to the light housing,
wherein the light housing (14) and the hood panel (18) together define an enclosed volume and the hood also includes a fan (30) adapted to remove air from the volume.

2. The barbeque hood as claimed in claim 1, wherein the hood includes at least one bracket (24) between the hood panel and the light housing.

3. The barbeque hood as claimed in claim 2, wherein the bracket(s) (24) is/are attached to the hood panel by welding and to the light housing by screws.

4. The barbeque hood as claimed in claim 1, 2 or 3, wherein the light housing includes at least one vent opening (28) therein.

5. The barbeque hood as claimed in any one of claims 1 to 4, wherein the fan (30) is in fluid communication with the volume via a duct (32).

6. The barbeque hood as claimed in any one of claims 1 to 5, wherein the fan (30) is mounted to the hood panel (18).

7. The barbeque hood as claimed in any one of claims 1 to 6, wherein the hood also includes at least one hood lining (22) mounted to, and spaced apart, from the hood panel.

8. The barbeque hood as claimed in any one of claims 1 to 7, wherein the hood includes a rear part and a front part.

9. The barbeque hood as claimed in claim 8, wherein the rear part is fixed to the barbeque.

10. The barbeque hood as claimed in claim 8 or 9, wherein the light housing is mounted to the rear part.

11. The barbeque hood as claimed in claim 8, 9 or 10, wherein the front part is pivotally mounted to the rear part.

## Patentansprüche

1. Eine Grillhaube, die Haube bestehend aus:
einer Haubenplatte (18) mit einer inneren und
einer äußeren Oberflȧche,
einem angrenzend an die innere Oberfläche der Haube angebrachten Beleuchtungsgehause (14),
sowie
mindestens einem am Beleuchtungsgehäuse angebrachten Beleuchtungskorper (16),
bei welcher das Beleuchtungsgehause (14) und die Haubenplatte (18) zusammen einen umschlossenen Hohlraum begrenzen und die Haube auch einen Lufter (30) umfasst, der so ausgelegt ist, dass er Luft aus dem Hohlraum absaugt.

2. Die Grillhaube nach Anspruch 1, bei welcher die Haube mindestens einen Befestigungsarm (24) zwischen der Haubenplatte und dem Beleuchtungsgehȧuse umfasst.

3. Die Grillhaube nach Anspruch 2, bei welcher der Befestigungsarm/die Befestigungsarme (24) an der Haubenplatte durch Schweißung und am Beleuchtungsgehäuse mit Schrauben befestigt ist/sind.

4. Die Grillhaube nach Anspruch 1, 2 oder 3, bei welcher das Beleuchtungsgehäuse mindestens eine in ihm befindliche Beluftungsȯffnung (28) umfasst.

5. Die Grillhaube nach einem beliebigen der Ansprüche 1 bis 4, bei welcher der Lüfter (30) uber eine Leitung (32) in Fluidverbindung mit dem Hohlraum steht.

6. Die Grillhaube nach einem beliebigen der Ansprüche 1 bis 5, bei welcher der Lu̇fter (30) an der Haubenplatte (18) angebracht ist.

7. Die Grillhaube nach einem beliebigen der Anspru̇che 1 bis 6, bei welcher die Haube auch aus mindestens einer Haubenauskleidung (22) besteht, welche an der Haubenplatte und mit einem Zwischenraum zu dieser befestigt ist.

8. Die Grillhaube nach einem beliebigen der Anspru̇che 1 bis 7, bei welcher die Haube einen hinteren Teil und einen vorderen Teil umfasst.

9. Die Grillhaube nach Anspruch 8, bei welcher der hintere Teil am Grill befestigt ist.

10. Die Grillhaube nach Anspruch 8 oder 9, bei welcher das Beleuchtungsgehäuse am hinteren Teil befestigt ist.

11. Die Grillhaube nach Anspruch 8, 9 oder 10, bei welcher der vordere Teil schwenkbar am hinteren Teil befestigt ist.

## Revendications

1. Capot de barbecue, le capot comprenant:
un panneau de capot (18) avec une surface extérieure et une surface intérieure,
un logement à éclairage (14) monté en position adjacente à la surface intérieure du capot ; et
au moins un éclairage (16) monté sur le logement à éclairage,
cas dans lequel le logement à éclairage (14) et le panneau de capot (18) définissent ensemble un volume fermé et le capot englobe également un ventilateur (30) conçu pour évacuer l'air à partir du volume.

2. Capot de barbecue selon la revendication 1, le capot comportant au moins une bride (24) entre le panneau de capot et le logement à éclairage.

3. Capot de barbecue selon la revendication 2, la bride/les brides (24) étant attachée(s) au panneau de capot par un processus de soudage et au logement à éclairage à l'aide de vis.

4. Capot de barbecue selon la revendication 1, 2 ou 3, le logement à éclairage comportant dans celui-ci au moins une ouverture d'aération (28).

5. Capot de barbecue selon l'une quelconque des revendications 1 à 4, le ventilateur (30) étant en communication fluidique avec le volume par l'intermédiaire d'une gaine (32).

6. Capot de barbecue selon l'une quelconque des revendications 1 à 5, le ventilateur (30) étant monté sur le panneau de capot (18).

7. Capot de barbecue selon l'une quelconque des revendications 1 à 6, le capot comportant également au moins un garnissage de capot (22) monté sur le panneau de capot, et espacé par rapport à ce dernier.

8. Capot de barbecue selon l'une quelconque des revendications 1 à 7, le capot comportant une partie arrière et une partie frontale.

9. Capot de barbecue selon la revendication 8, la partie arrière étant fixée au barbecue.

10. Capot de barbecue selon la revendication 8 ou 9, le logement à éclairage étant monté sur la partie arrière.

11. Capot de barbecue selon la revendication 8, 9 ou 10, la partie frontale étant montée de façon pivotante sur la partie arrière.
